# EUROPÄISCHE PATENTSCHRIFT

(11) **EP 2 216 789 B1**
(45) Veröffentlichungstag und Bekanntmachung des Hinweises auf die Patenterteilung: **01.03.2017**
(21) Anmeldenummer: 10151566.6
(22) Anmeldetag: 25.01.2010
(51) Int. Cl.: G21H 5/02, G21G 4/00, G21G 4/04, G21G 4/08, C07F 7/08, C07F 7/30

(54) **Radionuklidgenerator mit Molekül zur Funktionalisierung eines Trägers, Bindung eines Radionuklids an dem Träger und Radionuklidgenerator zur Herstellung des Radionuklids sowie Herstellungsverfahren**
Radionuclide generator with molecule for functionalising a carrier, adhesion of a radionuclide to the carrier and radionuclide generator for producing the radionuclide and production method
Générateur de radio-nuclide avec molécule de fonctionnalisation d'un support, connexion d'un radio-nuclide sur le support et générateur de radio-nuclide pour la fabrication du radio-nuclide, ainsi que procédé de fabrication

(30) Priorität: 06.02.2009 DE 102009007799
(43) Veröffentlichungstag der Anmeldung: 11.08.2010
(73) Patentinhaber: ITM Isotopen Technologien München AG, 85748 Garching (DE)
(72) Erfinder: Zhernosekov, Konstantin, 80805 München (DE); Nikula, Tuomo, 85521 Ottobrunn (DE)
(74) Vertreter: Hartig, Michael

(56) Entgegenhaltungen:
- WO-A1-03/030953
- GB-A- 2 056 471
- US-A1- 2007 009 409

## Beschreibung

Die Erfindung betrifft ein Molekül zur Funktionalisierung der Oberfläche eines inerten Trägers und Verwendung bei der Herstellung eines Radionuklids mit einem hohen Reinheitsgrad in einem Generator. Insbesondere betrifft die Erfindung ein Molekül zur Bindung eines radioaktiven Mutternuklids, insbesondere von Germanium-68, an einen Träger.

Radionuklide, insbesondere Positronen-Emitter finden bei der Positronen-Emissions-Tomographie (PET) Verrwendung. Bei einer PET-Untersuchung an einem Patienten wird die Verteilung einer schwach radioaktiv mit einem Positronen-Emitter markierten Substanz, wie beispielsweise eines Biomoleküls, in einem Organismus mit Hilfe des radioaktiven Zerfalls des Positronen-Emitters mit einem Detektor sichtbar gemacht.

Da Biomoleküle am gewöhnlichen Stoffwechsel des Organismus teilnehmen und sich dabei unter anderem in Tumorzellen anreichern, kann die PET zur Erkennung von Tumorzellen verwendet werden.

Ein Beispiel eines für die PET bevorzugten Radionuklids ist Gallium-68, das mit einem Germanium-68/Gallium-68 Radionuklidgeneratorsystem gewonnen werden kann (1, 2). Das Iso-top Gallium-68 zerfällt mit einer Halbwertszeit von 67,63 Minuten unter Aussendung eines Positrons. Gallium-68 eignet sich aufgrund seiner physikalischen und chemischen Eigenschaften sehr gut für nuklearmedizinische Untersuchungen. Aufgrund seiner kurzen Halbwertszeit eignet es sich insbesondere zur Radiomarkierung von Biomolekülen.

Gallium-68 kann durch radioaktiven Zerfall aus dem Mutternuklid Germanium-68 erzeugt werden, das mit einer Halbwertszeit von 270,8 Tagen zerfällt.

Im Generator ist das Germanium-68 an eine unlösliche Matrix eines inerten Trägers gebunden, wobei durch den kontinuierlichen Zerfall des Germaniums ständig Gallium-68 gebildet wird, das durch Eluieren mit einem Lösungsmittel aus dem Generator extrahiert werden kann.

Die zur Markierung der Radiopharmazeutika verwendeten Radionuklide müssen hohen Qualitätsanforderungen genügen. Insbesondere müssen die erzeugten Radionuklide einen hohen Reinheitsgrad aufweisen und frei von metallischen Verunreinigungen sein, da diese die Markierung der Radiopharmazeutika durch Konkurrenzreaktionen negativ beeinflussen und die produktionstechnisch erzielbare Ausbeute mindern können (3 - 5).

Bekannte Germanium-68/Gallium-68-Generatorsysteme verwenden für die stationäre Phase als Träger anorganische Ionen-Austauschsubstanzen, wie beispielsweise TiO₂, SnO₂, Al(OH)₃. Das damit extrahierte Gallium-68 ist jedoch nachteiliger Weise mit metallischen Verunreinigungen versehen, so dass vor einer Verwendung in einem Radiopharmazeutikum eine Reinigung des ursprünglichen Eluats notwendig ist (4, 5).

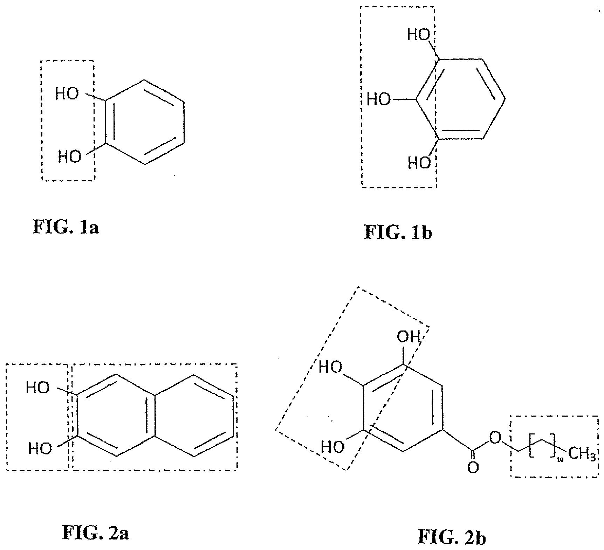

Als Alternative zu anorganischen Ionen-Austausch-Substanzen werden in Generatoren als Träger organische Polymere verwendet, an die mit Hilfe von funktionalen Gruppen einzelne Moleküle angelagert sind, die eine hohe Germanium-Affinität aufweisen. Derartige Moleküle können beispielsweise Pyrogallol oder Catechol sein, welche über phenolische Hydroxylgruppen stabile Komplexe mit Germanium bilden (Fig. 1A) (6).

Bei einem bekannten Germanium-68/Gallium-68-Generator wird ein aus Pyrogallol und Formaldehyd hergestelltes Harz als Träger verwendet (4-7). Bei der Herstellung des Germaniumspezifischen Harzes wird Pyrogallol durch eine Copolymerisation mit Formaldehyd an dem Träger immobilisiert. Diese Materialien und Generatorsysteme zeigen jedoch eine begrenzte Anwendbarkeit.

So kann Gallium-68 bei den oben genannten, auf organischem Polymer basierenden Germanium-68/Gallium-68-Generatoren nur in konzentrierten Säurelösungen (3-6M) erhalten werden. Dies erfordert eine Nachbearbeitung des Eluats vor einer Verwendung als Radiopharmazeutikum.

Darüber hinaus stellt das Verfahren zur Synthese des Pyrogallol-Formaldehyd-Harzes hohe technische Anforderungen und ist kostspielig. Zusätzlich ist die Hauptkomponente der Formaldehyd-Matrix giftig, so dass eine Herstellung eines injizierbaren Radiopharmazeutikums zusätzliche Reinigungsschritte erforderlich macht.

WO 03/030953 A1 offenbart einen absorbierenden Exoprotein-verhindernden Artikel zur Absorption von Körperflüssigkeiten mit einem absorbierenden Material und dem Wirkstoff Lauryl-3,4,5-Trihydroxybenzoat.

US 2007/0009409 A1 offenbart einen 212Bi- oder 213Bi-Generator mit einem Ionenaustauschabsorptionsmittel, das Sauerstoff enthaltende funktionale Gruppen umfasst, die durch organische Verbindungsgruppen auf einem anorganischen Sauerstoff-verbundenen Netz angeordnet sind.

Die Aufgabe der vorliegenden Erfindung ist es, eine Substanz für die Herstellung eines Radionuklids mit einem Generator bereitzustellen, mit der ein Radionuklid an einen Träger, der als stationäre Phase im Generator verwendet werden kann, gebunden werden kann und welche eine Herstellung des Radionuklids mit einem hohen Reinheitsgrad und ohne Verunreinigungen ermöglicht sowie einen entsprechenden Generator und ein Herstellungsverfahren.

Die Aufgabe wird gelöst durch ein Molekül mit den Merkmalen gemäß Anspruch 1.

Erfindungsgemäß wird ein Molekül zur Bindung eines radioaktiven Mutternuklids an einen Träger bereitgestellt, dass zumindest eine funktionale Gruppe zur Bindung des radioaktiven Mutternuklids und eine Molekülgruppe umfasst, die geeignet ist, nicht-polare Bindungen mit dem Träger herzustellen.

Aufgrund der nicht-polaren Bindung mit dem Träger kann das radioaktive Mutternuklid in einer wässerigen Lösung, die zum Eluieren des Tochternuklids in einem Generator verwendet werden kann, nicht vom Trägermaterial gelöst werden. Dadurch kann eine Verunreinigung des Eluats vermieden werden und die Lebensdauer des Generators für nachfolgende Eluierungen erhöht werden.

Bei dem radioaktiven Mutternuklid kann es sich um Germanium-68 handeln, das in Gallium-68 zerfällt. Es kann somit ein Träger für einen Germanium-68/Gallium-68 Generator bereitgestellt werden, der eine Herstellung von hochreinem Gallium-68, im wesentlichen ohne Verunreinigungen, insbesondere metallische Verunreinigungen, und mit einem hohen Reinheitsgrad und vorzugsweise ohne weitere Vorbereitungsschritte vor einer Verwendung in einem Radiopharmazeutikum ermöglicht. Der erreichbare Reinheitsgrad beträgt vorzugsweise weniger als 1ppm, bevorzugt weniger als 100 ppb, besonders bevorzugt weniger als 10ppb oder sogar weniger als 1ppb an Verunreinigungen.

Gemäß einer Ausführungsform umfasst die funktionale Gruppe zur Bindung des Mutternuklids eine Hydroxylgruppe und bevorzugt eine phenolische Hydroxylgruppe. Das Molekül kann auch mehrere funktionale Gruppen, wie beispielsweise zwei, drei oder mehr funktionale Gruppen umfassen. Mit Hilfe der funktionalen Gruppe, die eine hohe Affinität für Germanium aufweist, so dass eine quantitative Adsorption des Germaniums aus der flüssigen Phase möglich ist, können stabile Komplexe mit Germaniummolekülen ausgebildet werden.

Gemäß einer bevorzugten Ausführungsform ist das Mutternuklid Germanium-68 und die funktionale Gruppe Pyrogallol oder Catechol.

Gemäß einer weiteren bevorzugten Ausführungsform ist die Molekülgruppe, die geeignet ist, eine nicht-polare Bindung mit dem Träger herzustellen, hydrophob. Mit Hilfe einer hydrophoben Molekülgruppe kann das Molekül durch eine nicht-polare Bindung an einen inerten Träger gebunden oder daran immobilisiert werden, wobei i.a. ein Lösen des Moleküls und des daran gebundenen Mutternuklids in einer wässerigen Lösung verhindert wird.

Im Gegensatz dazu haben bekannte, eine oder mehrere Germanium-spezifische funktionale Gruppen aufweisende Verbindungen, wie bspw. Catechol und Pyrogallol, eine hohe Löslichkeit in wässerigen Lösungen. Eine direkte Bindung von Catechol und Pyrogallol an einen inerten Träger, die einer Extraktion des Tochternuklids aus dem Generator mit einer wässerigen Lösung Stand hält, ist nicht möglich. Catechol und Pyrogallol weisen eine Löslichkeit in Wasser von 450 g/l bzw. 400 g/l auf.

Durch die Verwendung von Derivaten derartiger Moleküle, die neben zumindest einer Germanium-spezifischen funktionalen Gruppe zusätzlich eine hydrophobe Molekülgruppe aufweisen, kann eine Unlöslichkeit in Wasser erreicht werden.

Gemäß einer weiteren bevorzugten Ausführungsform wird die hydrophobe Molekülgruppe ausgewählt aus der Gruppe umfassend:
(i) aromatische und heteroaromatische Gruppen, wie z.B. Benzol, Naphthalin, Chi;
(ii) Fettsäuren, gesättigt oder ungesättigt, mit mehr als 3 C-Atomen, vorzugsweise zwischen 3 und 20 C-Atomen;
(iii) verzweigte oder unverzweigte Alkylketten, mit mehr als 3 C-Atomen, wie z.B. Octyl-, Decyl- oder Octadecyl- Gruppen, vorzugsweise zwischen 3 und 20 C-Atomen

Gemäß einer bevorzugten Ausführungsform ist das Molekül ein organisches Molekül aus der Gruppe umfassend, 2,3-Dihydroxynaphtalen und Dodecyl-3,4,5-Trihydroxybenzoat.

Gemäß einer weiteren bevorzugten Ausführungsform ist der Träger ausgewählt aus der Gruppe umfassend einen organischen Träger oder einen anorganischen Träger wie z.B. Silicagel.

Erfindungsgemäß wird des weiteren ein Träger zur Verwendung als stationäre Phase bereitgestellt, welcher zumindest ein erfindungsgemäßes Molekül gemäß einer der zuvor beschriebenen Ausführungsformen umfasst und das mittels einer nicht-polaren Bindung an den Träger gebunden ist.

Erfindungsgemäß wird des weiteren ein Generator für ein radioaktives Tochternuklid, insbesondere Gallium-68 bereitgestellt, der ein erfindungsgemäßes Molekül nach einer der zuvor beschriebenen Ausführungsformen, einen Träger, wobei das Molekül mittels einer nicht-polaren Bindung an den Träger gebunden ist, und ein Mutternuklid, insbesondere Germanium-68, umfasst, das durch die funktionale Gruppe an das Molekül gebunden ist.

Erfindungsgemäß wird des weiteren ein Verfahren zur Herstellung eines radioaktiven Tochternuklids bereitgestellt, das die Schritte umfasst: Bereitstellen eines Generators, der einen Träger und ein Mutternuklid umfasst, das an ein erfindungsgemäßes Molekül nach einer der oben beschriebenen Ausführungsformen gebunden ist, wobei das Molekül mittels einer nicht-polaren Bindung an den Träger gebunden ist, und ein Eluieren des Tochternuklids.

Mit dem erfindungsgemäßen Generator ist es möglich, Gallium-68 mit einem besonders hohen Reinheitsgrad herzustellen, wobei metallische Verunreinigungen und andere Rückstände aus den Generator weitestgehend vermieden werden können. Der Generator kann mit geringem Aufwand und kostengünstig hergestellt werden.

Gemäß einer weiteren bevorzugten Ausführungsform umfasst das Verfahren das Beladen des Generators mit Silicagel als Träger, auf das das Molekül aufgebracht ist.

Gemäß noch einer weiteren Ausführungsform umfasst das Verfahren das in Kontakt bringen des Trägers mit dem Mutternuklid in einer Lösung. Als Lösungsmittel kommen die folgenden Substanzen in Frage: Wasser, wässrige Säuren, Lösungen, Salzlösungen, wie beispielsweise Pufferlösungen, organische Lösungen auf Basis von Alkohol, Ether usw.

Gemäß einer weiteren bevorzugten Ausführungsform kann das Mutternuklid Germanium-68 umfassen, dass in Gallium-68 zerfällt.

Schließlich umfasst die Erfindung die Verwendung eines Moleküls nach einer der oben angegebenen Ausführungsformen zur Herstellung von reinem Gallium-68.
- Fig. 1a, b: zeigen die Strukturformeln von Catechol (Fig. 1a) und Pyrogallol als Germanium-spezifische funktionale Gruppen aufweisende Verbindungen;
- Fig. 2a, b: zeigen die Strukturformeln von Beispielen erfindungsgemäßer Moleküle, wie 2,3-Dihydroxynaphtalen (Fig. 2a) und Dodecyl-3,4,5-Trihydroxybenzoat

### Beispiel

Ein Germanium-spezifisches Harz wurde durch Beschichten von inertem Silicagel mit Dodezyl-3,4,5-Trihydroxybenzoat mit der in Fig. 2b gezeigten Strukturformel zubereitet. Das Harz wurde für die Vorbereitung kleiner chromatographischer Säulen verwendet. Anschließend wurde eine wässerige Lösung mit dem Radionuklid-Germanium-68 mit einer Aktivität im Bereich zwischen 20 und 1250 MBq durch die Säulen gepumpt. Dabei wurde das Germanium-68 an den Säulen quantitativ adsorbiert.

Anschließend wurden die mit Germanium-68 beladenen Säulen zur Herstellung des kurzlebigen Gallium-68 verwendet. Das kontinuierlich durch das auf dem Träger absorbierte Germanium-68 erzeugte Gallium-68 konnte wiederholt eluiert werden. Die Eluierung von Gallium-68 wurde in schwach hydrochlorischen Säurelösungen (0,05 M HCl) mit einem geringem Volumen von bis zu 2,5 ml erzeugt. Der Durchbruch des Mutternuklids-Germanium-68 lag im Bereich 1.10⁻⁴ - 3.10⁻³ %. Das Gallium-68 konnte direkt und ohne eine weitere chemische Nachbearbeitung zur Zubereitung injizierbarer Gallium-68-Radiopharmaka verwendet werden.

### Literaturangaben:

1) Al-Nahhas A, Win Z, Szysko T, Singha A, Nannil C, Fanti S, Rubello D. Gallium-68 PET: A New Frontier in Receptor Cancer Imaging. Anticancer research. 2007; 27: 4087 - 4094
2) Helmut M, Hofmann M, Haberkorn U. 68Ga-Labeled Peptides in Tumor Imaging. J Nuc Med. 2005; 46: 172S - 178S
3) Breeman W, Jong M, Blois E, Bernard B, Konijnenberg M, Krenning E. Radiolabelling DOTA-peptides with 68Ga. Eur J Nuc Med Mol Imaging. 2005; 32: 478 - 458
4) Meyer G-J, Mäcke H, Schuhmacher J, Knapp W, Hofmann M. 68Ga-labelled DOTAderivatised peptide ligans. Eur J Nuc Med Mol Imaging. 2004; 31: 1097 - 1104
5) Zhernosekov K, Filosofov D, Baum R, Aschoff P, Bihl H, Razbash A, Jahn M, Jennewein M, Rösch F. Processing of generator-produced 68Ga for medical application. J Nuc Med. 2007; 48: 1741 - 1748
6) Patent DE 29 32 948 A1
7) Schuhmacher J, Maier-Borst W. A new 68Ge/68Ga radioisotope generator system for production of 68Ga in dilute HCl. I J Appl Rad Isotopes. 1981; 32: 31 - 36

## Patentansprüche

1. Radionuklidgenerator Ge-68/Ga-68, umfassend:
- ein Molekül mit zumindest einer funktionalen Gruppe zur Bindung eines radioaktiven Mutternuklids und einer Molekülgruppe, die geeignet ist, eine nichtpolare Bindung mit einem Träger herzustellen, wobei das Molekül mittels der nichtpolaren Bindung an den Träger gebunden ist; und
- Germanium-68 als ein Mutternuklid, das durch die funktionale Gruppe an das Molekül gebunden ist.

2. Generator nach Anspruch 1, wobei das radioaktive Mutternuklid Germanium- in Gallium-68 zerfällt.

3. Generator nach Anspruch 1 oder 2, wobei die funktionale Gruppe eine Hydroxylgruppe, bevorzugt eine phenolische Hydroxylgruppe umfasst.

4. Generator nach einem der vorhergehenden Ansprüche, wobei die funktionale Gruppe Pyrogallol oder Catechol ist.

5. Generator nach einem der vorhergehenden Ansprüche, wobei die Molekülgruppe hydrophob ist.

6. Generator nach Anspruch 5, wobei die hydrophobe Molekülgruppe ausgewählt ist aus der Gruppe, umfassend:
- Eine aromatische oder heteroaromatische Gruppe;
- Eine Fettsäure, gesättigt oder ungesättigt, mit mehr als 3 C-Atomen;
- Eine verzweigte oder unverzweigte Alkylkette, mit mehr als 3 C-Atomen, wie z.B. Octyl-, Decyl- oder Octadecyl- Gruppen.

7. Generator nach einem der vorhergehenden Ansprüche, wobei das Molekül ein organisches Molekül aus der Gruppe umfassend 2,3-Dihydroxynaphtalen und Dodecyl-3,4, 5-Trihydroxybenzoat ist.

8. Generator nach einem der vorhergehenden Ansprüche, wobei der Träger ausgewählt ist aus der Gruppe umfassend einen organischen Träger oder einen anorganischen Träger, umfassend Harz und Silicagel.

9. Kombination aus einem Molekül zur Bindung eines radioaktiven Mutternuklids an einen Träger und Germanium-68, wobei das Molekül zumindest eine funktionale Gruppe zur Bindung des radioaktiven Mutternuklids und eine Molekülgruppe umfasst, die geeignet ist, eine nichtpolare Bindung mit dem Träger herzustellen.

10. Verfahren zur Herstellung von Gallium 68, umfassend die Schritte:
- Bereitstellen eines Generators, der einen Träger und Germanium-68 als Mutternuklid umfasst, das an ein Molekül gebunden ist, das zumindest eine funktionale Gruppe zur Bindung des radioaktiven Mutternuklids umfasst, wobei das Molekül mittels einer nichtpolaren Bindung an den Träger gebunden ist; und
- Eluieren des Tochternuklids.

11. Verfahren nach Anspruch 10, welches das Beladen des Generators mit Silicagel als Träger umfasst, das mit dem Molekül beschichtet ist.

12. Verfahren nach Anspruch 10 oder 11, welches das in Kontakt bringen des Trägers mit dem Mutternuklid in einer Lösung umfasst.

13. Verwendung eines Moleküls mit zumindest einer funktionalen Gruppe zur Bindung eines radioaktiven Mutternuklids und mit einer Molekülgruppe, die geeignet ist, eine nichtpolare Bindung mit einem Träger herzustellen, wobei das Molekül mittels der nichtpolaren Bindung an den Träger gebunden wird zur Herstellung von reinem Gallium-68.

## Claims

1. Ge-68/Ga-68 radionuclide generator, comprising:
A molecule with at least one functional group for attaching a radioactive parent nuclide and a molecular moiety, suitable for establishing a non-polar bond to a support, wherein the molecule is bonded to the support by means of the non-polar bond; and
germanium-68 as a parent nuclide, which is bonded to the molecule by the functional group.

2. Generator according to claim 1, wherein the radioactive parent nuclide germanium decays into gallium-68.

3. Generator according to claim 1 or 2, wherein the functional group comprises a hydroxyl group, preferably a phenolic hydroxyl group.

4. Generator according to any one of the preceding claims, wherein the functional group is pyrogallol or catechol.

5. Generator according to any one of the preceding claims, wherein the molecule group is hydrophobic.

6. Generator according to claim 5, wherein the hydrophobic molecule is selected from the group comprising:
- An aromatic or heteroaromatic group;
- A fatty acid, saturated or unsaturated, with more than 3 C-atoms;
- A branched or unbranched alkyl chain, with more than 3 C-atoms, such as, for example, octyl, decyl, or octadecyl groups.

7. Generator according to any one of the preceding claims, wherein the molecule is an organic molecule from the group comprising 2,3-dihydroxynaphthalene and dodecyl-3,4,5-trihydroxybenzoate.

8. Generator according to any one of the preceding claims, wherein the support is selected from the group comprising an organic support or an inorganic support, comprising resin and silica gel.

9. Combination of a molecule for bonding a radioactive parent nuclide to a support and germanium-68, wherein the molecule comprises at least one functional group for bonding the radioactive parent nuclide and a molecule group which is suitable for establishing a non-polar bond to the support.

10. Method for producing gallium 68, comprising the steps:
- Preparing a generator, which comprises a support and germanium-68 as parent nuclide, which is bonded to a molecule comprising at least one functional group for bonding the radioactive parent nuclide, wherein the molecule is bonded by means of a non-polar bond to the support; and
- eluting the daughter nuclide.

11. Method according to claim 10, which comprises the charging of the generator with silica gel as support, which is coated with the molecule.

12. Method according to claim 10 or 11, which comprises the bringing of the support in contact with the parent nuclide in a solution.

13. Use of a molecule with at least one functional group for bonding a radioactive parent nuclide, and with a molecule group which is suitable for establishing a non-polar bond with a support, wherein the molecule is bonded to the support by means of the non-polar bond in order to produce pure gallium-68.

## Revendications

1. Générateur de radionucléides Ge-68/Ga-68, comprenant :
- une molécule comprenant au moins un groupe fonctionnel pour liaison d'un nucléide mère radioactif et d'un groupe moléculaire, qui est apte à réaliser une liaison non-polaire à un support, la molécule étant liée au support par une liaison non-polaire ; et
- du germanium-68 en tant que nucléide mère, qui est lié à la molécule par l'intermédiaire du groupe fonctionnel.

2. Générateur selon la revendication 1, dans lequel le nucléide mère radioactif germanium- se décompose en gallium-68.

3. Générateur selon la revendication 1 ou 2, dans lequel le groupe fonctionnel comprend un groupe hydroxyle, de préférence un groupe hydroxyle phénolique.

4. Générateur selon l'une des revendications précédentes, dans lequel le groupe fonctionnel est le pyrogallol ou le catéchol.

5. Générateur selon l'une des revendications précédentes, dans lequel le groupe moléculaire est hydrophobe.

6. Générateur selon la revendication 5, dans lequel le groupe moléculaire hydrophobe est choisi dans le groupe comprenant :
- un groupe aromatique ou hétéroaromatique ;
- un acide gras, saturé ou insaturé, ayant plus de 30 atomes de carbone ;
- une chaîne alkyle ramifiée ou non ramifiée, ayant plus de 3 atomes de carbone, telle que par exemple les groupes octyle, décyle ou octadécyle.

7. Générateur selon l'une des revendications précédentes, dans lequel la molécule est une molécule organique du groupe comprenant le 2,3-dihydroxynaphtalène et le 3,4,5-trihydroxybenzoate de dodécyle.

8. Générateur selon l'une des revendications précédentes, dans lequel le support est choisi dans le groupe comprenant un support organique ou un support inorganique, comprenant une résine et du gel de silice.

9. Combinaison d'une molécule pour liaison d'un nucléide mère radioactif à un support et de germanium-68, la molécule comprenant au moins un groupe fonctionnel pour liaison du nucléide mère radioactif et d'un groupe moléculaire, qui est apte à réaliser une liaison non-polaire au support.

10. Procédé de fabrication de gallium 68, comprenant les étapes :
- mise à disposition d'un générateur qui comprend un support et du germanium-68 en tant que nucléide mère, qui est lié à une molécule qui comprend au moins un groupe fonctionnel pour liaison du nucléide mère radioactif, la molécule étant liée au support par l'intermédiaire d'une liaison non-polaire ; et
- élution du nucléide fille.

11. Procédé selon la revendication 10, qui comprend le chargement du générateur par du gel de silice servant de support, qui est revêtu de la molécule.

12. Procédé selon la revendication 10 ou 11, qui comprend la mise en contact du support avec le nucléide mère en solution.

13. Utilisation d'une molécule ayant au moins un groupe fonctionnel pour liaison d'un nucléide mère radioactif, et un groupe moléculaire qui est apte à réaliser une liaison non-polaire avec un support, la molécule étant liée au support par l'intermédiaire de la liaison non-polaire, pour fabriquer du gallium-68 pur.
